# EUROPÄISCHE PATENTSCHRIFT

(11) **EP 2 046 566 B1**
(45) Veröffentlichungstag und Bekanntmachung des Hinweises auf die Patenterteilung: **04.11.2009**
(21) Anmeldenummer: 07729429.6
(22) Anmeldetag: 23.05.2007
(51) Int. Cl.: B29D 30/00

(54) **ZUBRINGEREINRICHTUNG**
SUPPLY DEVICE
DISPOSITIF D'ALIMENTATION

(30) Priorität: 22.07.2006 DE 102006033987
(43) Veröffentlichungstag der Anmeldung: 15.04.2009
(73) Patentinhaber: Continental Aktiengesellschaft, 30165 Hannover (DE)
(72) Erfinder: MEHLAU, Volker, 37603 Holzminden (DE); GERIGHAUSEN, Martin, 30890 Barsinghausen (DE)
(74) Vertreter: Finger, Karsten
(86) Internationale Anmeldenummer: PCT/EP2007/054991
(87) Internationale Veröffentlichungsnummer: WO 2008/012126

(56) Entgegenhaltungen:
- EP-A1- 0 649 730
- EP-A2- 0 501 030
- WO-A-01/12423
- DE-A1- 2 639 689
- DE-A1- 19 641 509
- DE-A1- 19 938 151
- JP-A- 8 300 511
- JP-A- 57 146 643

## Beschreibung

Die Erfindung betrifft eine Zubringereinrichtung für eine Reifenaufbautrommel, insbesondere für eine Gürteltrommel zum Aufbau eines mehrlagigen Gürtelpaketes eines Fahrzeugluftreifens, wobei auf der Reifenaufbautrommel nacheinander mehrere Lagen von unterschiedlichen oder unterschiedlich behandelten und im Wesentlichen streifenförmigen Materialbahnstücken aufgelegt, angerollt und miteinander verbunden werden,
wobei die Zubringereinrichtung vier Auswickelstationen, diesen nachgeordnete Führungsvorrichtungen für die Materialbahnen, sowie den einzelnen Führungsvorrichtungen zugeordnete Zuführungs- und Schneideinrichtungen zum Ablängen der Materialbahnen aufweist,
wobei die geschnittenen Materialbahnstücke mittels einer Trommelzuführeinrichtung, welche zwei Trommelzuführbänder aufweist, zur Reifenaufbautrommel transportierbar sind, wobei die Trommelzuführbänder zwischen einer rückwärtigen Aufnahmeposition und einer vorgerückten Auflageposition an der Reifenaufbautrommel verfahrbar sind,
wobei den Trommelzuführbändern zwei Paare von übereinander angeordneten Schneideinrichtungen zugeordnet sind, welche relativ zu den Trommelzuführbändern derart verfahrbar sind, dass die Trommelzuführbänder in der rückwärtigen Aufnahmeposition abwechselnd mit einem der Paare von Schneideinrichtungen in Wirkverbindung bringbar sind.

Eine derartige Zubringereinrichtung ist aus der DE 199 38 151 A1 bekannt. Die mit der Trommelzuführeinrichtung, welche zwei Förderbänder aufweist, in Wirkverbindung bringbare Zuführungs- und Schneideinrichtungen sind übereinander angeordnet und im Wesentlichen senkrecht zur Trommelzuführeinrichtung verfahrbar. Die Trommelzuführeinrichtung, bzw. deren beide Förderbänder sind zur Aufnahme der Materialbahnen und während des Schneidvorganges in eine rückwärtige Schneid- und Aufnahmeposition verfahrbar.

Aus der DE 196 41 509 A1 ist eine Vorrichtung zur Förderung und zum Aufbereiten eines Gürtelaufbaustreifens mit parallelen, schräg zur Förderrichtung verlaufend angeordneten, in Kautschuk eingebetteten Festigkeitsträgern, insbesondere aus Stahl, bekannt, mittels welcher der geschnittene Gürtelaufbaustreifen zu einer nachgeordneten Gürtelaufbautrommel transportierbar ist. Die Vorrichtung weist zwei hintereinander angeordnete Förderbänder auf, von welchen das in Förderrichtung vorgeordnete gesteuert seitlich verschiebbar ausgebildet ist. Es ist eine Sensoreinrichtung mit mindestens zwei Sensoren zur Ermittlung der Position der Seitenkanten des Gürtellagenstreifens vorgesehen. Die Vorrichtung weist ferner Mittel zum gesteuerten Halten der vorderen Spitze des Gürtellagenstreifens im Bereich des zweiten Förderbandes auf. Die Sensoreinrichtung, die Antriebsmittel und die Mittel zum gesteuerten Halten sind so gekoppelt, dass durch seitliche Verschiebung des in Förderrichtung vorgeordneten Förderbandes gegenüber dem nachgeordneten Förderband in einem ersten Schritt die in Förderrichtung vordere Spitze des Gürtellagenstreifen in ihrer Formgebung und seitlichen Position ausgerichtet werden kann, in einem zweiten Schritt kann der Hauptteil des Gürtellagenstreifens in seiner Formgebung und seiner seitlichen Position mittensymmetrisch ausgerichtet werden und in einem dritten Schritt wird die gegen die Förderrichtung weisende Spitze hinsichtlich ihrer Formgebung und ihrer seitlichen Position ausgerichtet.

Der Stand der Technik kennt daher einerseits eine Zubringereinrichtung mit zwei hintereinander angeordneten Materialzuführbändern und einer Ausrichteinrichtung, und andererseits eine andere Zubringereinrichtung mit zwei Trommelzuführbändern und vier Schneideinrichtungen, wobei keine Ausrichtmöglichkeit vorgesehen ist. Die geschnittenen Materialbahnen müssen daher durch den Bediener auf der Trommel ausgerichtet werden, was mit einem erhöhten Zeitbedarf für das Wickeln der Materialbahnen, beispielsweise Gürtellagen, verbunden ist. Auch das Spleißen der Gürtellagen ist bei nicht ausgerichtetem Lagenmaterial durch die sich einstellende Ungenauigkeit des Spleißes sehr zeitaufwändig. Die Arbeitsgenauigkeit des Bedieners beeinflusst zudem die Positioniergenauigkeit des Gürtelmaterials auf der Trommel und die Spleißqualität.

Der Erfindung liegt die Aufgabe zu Grunde, bei einer Zubringereinrichtung der eingangs genannten Art auf eine einfache und zweckmäßige Weise das Vorsehen von Einrichtungen zur Ausrichtung des geschnittenen Materials zu ermöglichen.

Gelöst wird die gestellte Aufgabe erfindungsgemäß dadurch, dass die paarweise angeordneten Schneidvorrichtungen mit gleichermaßen paarweise angeordneten, Vorschubbändern gekoppelt sind, welche mitsamt den Schneidvorrichtungen einzeln vor den Trommelzuführbändern positionierbar sind, wobei die Vorschubbänder und die Trommelzuführbändern relativ zueinander in seitlicher Richtung bewegbar sind.

Die erfindungsgemäß ausgeführte Zubringereinrichtung kann daher vier Schneidvorrichtungen aufweisen, die mit Ausrichtvorrichtungen zusammenwirken können, wobei nur zwei Trommelzuführbänder erforderlich sind. Die Ausrichtung erfolgt dabei durch seitliche Relativbewegung zwischen den Vorschubbändern und den Trommelzuführbändern. Die Zubringereinrichtung weist eine kompakte Bauweise auf, erhöht die Qualität des Spleißes und die Positioniergenauigkeit der Materialbahnen auf der Trommel und bedingt durch die Erhöhung des Automatisierungsgrades eine Verringerung der Taktzeit.

Besonders einfach lässt sich die Ausrichtung der Materialbahnen mit Sensoreinrichtungen zum Erfassen der Positionen der Endabschnitte und der Seitenkanten der Materialbahnstücke bewerkstelligen, welche Sensoreinrichtungen jeweils mit jenen Paaren von Schneidvorrichtungen und Vorschubbändern zusammenwirken, welche zu den Trommelzuführbändern ausgerichtet sind.

Weitere Merkmale, Vorteile und Einzelheiten der Erfindung werden anhand der Zeichnung, die schematisch ein Ausführungsbeispiel darstellt, näher beschrieben. Dabei zeigen
Fig. 1 eine erfindungsgemäße Zubringereinrichtung in Seitenansicht und
Fig. 2 die Zubringereinrichtung gemäß Fig. 1 in Draufsicht.

Bei der in den Zeichnungsfiguren dargestellten Zubringereinrichtung (Servicer) erfolgt die Übergabe des Reifenbauteils an eine Reifenaufbautrommel 1 tangential und unterschlächtig an den Trommelumfang. Es handelt sich daher um einen sogenannten Bottom-Belt-Servicer. Eine erfindungsgemäß ausgeführte Zubringereinrichtung kann auch als Top-Belt-Servicer ausgeführt sein, bei dem die Übergabe des Reifenbauteils an die Reifenaufbautrommel tangential und oberschlächtig an den Trommelumfang erfolgt.

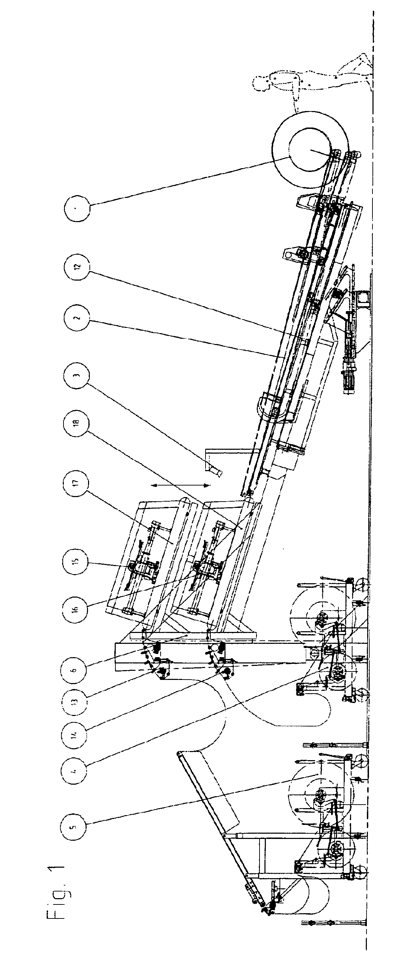

Die in Fig. 1 angedeutete Reifenaufbautrommel 1 ist insbesondere eine Gürteltrommel zum Aufbauen des Gürtelpaketes eines Radialluftreifens. Auf einer Gürteltrommel werden nacheinander die Gürtellagen aus streifenförmigen Materialteilen aufgelegt und angerollt. Bei einem PKW-Reifen werden üblicherweise zwei Gürtellagen, bei einem LKW-Reifen meist vier Gürtellagen zum Gürtelpaket verbunden. Nachdem die erfindungsgemäße Zubringereinrichtung auch für andere Reifenbauteile verwendet werden kann, wird nachfolgend der Begriff Materialbahn verwendet.

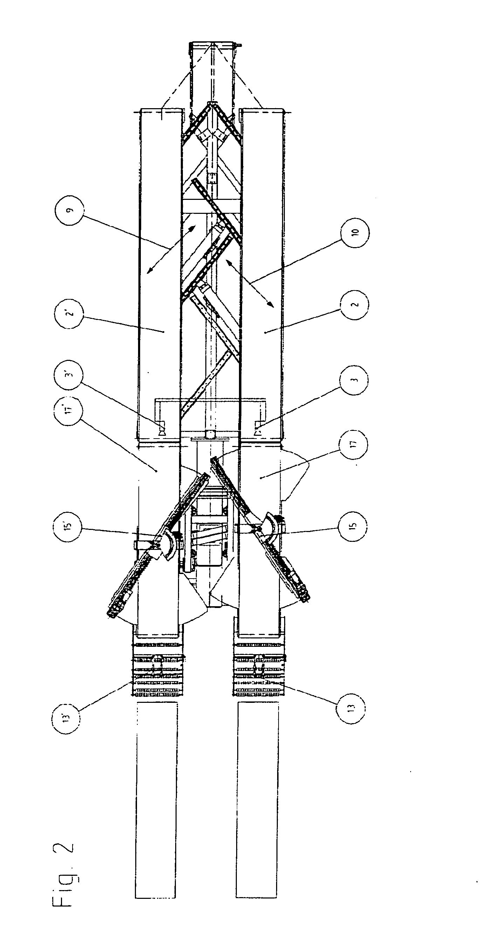

Die Zubringereinrichtung weist eine Trommelzuführeinrichtung 12 auf, welche bei der dargestellten Ausführung aus zwei umlaufenden bzw. durchlaufenden Trommelzuführbändern 2, 2' besteht. Die beiden Trommelzuführbänder 2, 2' sind, jedes für sich, aus einer rückwärtigen Übernahmeposition, die in Fig. 1 und Fig. 2 gezeigt ist, in eine vorgerückte Auflageposition, die in Fig. 1 und Fig. 2 gestrichelt angedeutet ist , in welcher das jeweilige Trommelzuführband 2, 2' mit seinem freien Ende die Reifenaufbautrommel 3 im unteren Bereich tangential anfährt, bringbar. Die beiden Trommelzuführbänder 2, 2' sind in einer derartigen Länge ausgeführt, dass sie jeweils das gesamte Reifenbauteil in Längsrichtung aufnehmen können. Die beiden Trommelzuführbänder 2, 2' sind ferner derart gelagert, dass sie mittels einer geeigneten Einrichtung in ihrer Ebene und gleichzeitig in Richtung der Pfeile 9 und 10 (Fig. 2), und zwar jedes Band 2, 2' für sich, verfahrbar sind. Durch eine Kippbewegung ist jedes der Trommelzuführbänder 2, 2' mit seinem äußeren Endabschnitt in Richtung Reifenaufbautrommel 1 bewegbar.

Die Zubringereinrichtung weist vier Auswickelstationen 4, 5 auf, die jeweils paarweise angeordnet sind und von welchen in Fig. 1 nur zwei zu sehen sind. Die beiden weiteren sind durch die dargestellten Auswickelstationen 4, 5 verdeckt. Die Auswickelstationen 4, 5 enthalten die aufgerollten streifenförmigen Materialbahnen für die Reifenbauteile. Die Materialbahnen werden über ein nicht näher beschriebenes System aus Rollen und Ausgleichschlingen zu Zuführungseinrichtungen 13, 14, 13', 14' und Schneideinrichtungen 15, 16, 15', 16' geführt. Dabei sind ein Paar von Schneideinrichtungen 15, 15' und ein Paar von Zuführungseinrichtungen 13, 13' oberhalb eines weiteren Paares von Schneideinrichtungen 16, 16' und eines weiteren Paares von Zuführungseinrichtungen 14, 14' an einer Hubeinrichtung 6 angeordnet, bzw. gelagert und mittels dieser in vertikaler Richtung und somit gegenüber den Trommelzuführbändern 2, 2' auf- und ab bewegbar. Jeder Schneideinrichtung 15, 15', 16, 16' ist jeweils ein Vorschubband 17, 17', 18, 18' zugeordnet. Die Vorschubbänder 17, 18 sind gemeinsam mit den Schneideinrichtungen 15, 16 die Vorschubbänder 17', 18' gemeinsam mit den Schneideinrichtungen 15', 16' an der Hubeinrichtung 6 vertikal auf- und ab bewegbar. Die Vorschubbänder 17, 17', 18, 18' sind als umlaufende Förderbänder ausgeführt, ihre Ausrichtung gegenüber der Horizontalen entspricht der Ausrichtung der Trommelzuführbänder 2, 2'. Die Bänder 17, 17', 18, 18' sind an der Hubeinrichtung 6 in Positionen bringbar, in welchen ihre Oberseiten mit den Bandoberseiten der Trommelzuführbänder 2, 2' fluchten, sodass die Förderrichtungen der Vorschubbänder 17 bzw. 18 mit jenen der Trommelzuführbänder 2, 2' übereinstimmen können.

Einzelne Bestandteile der Zubringereinrichtung können, wo erforderlich, mit Halte-und Fixiereinrichtungen, beispielsweise mit Magnetplatten, ausgerüstet sein, wenn die Materialbahnen, die über die Zubringereinrichtung gehandhabt werden, metallische Verstärkungselemente beinhalten.

Von den einzelnen Auswickelstationen 4, 5 werden die Materialbahnen für das Reifenbauteil, beispielsweise das Gürtellagenmaterial für vier Gürtellagen, über die Zuführeinrichtungen 13, 13', 14, 14' auf die Vorschubbänder 17, 17', 18, 18' transportiert. Das aus den einzelnen Auswickelstationen entnommene Ausgangsmaterial kann sich hinsichtlich seiner Ausführung, beispielsweise seiner Breite oder des Materials der enthaltenen Festigkeitsträger, unterscheiden. In der in Fig. 1 gezeigten Lage befinden sich die beiden Trommelzuführbänder 2, 2' in ihrer rückwärtigen Übernahmeposition, ausgerichtet auf die beiden Vorschubbänder 18, 18'. Die Enden der zugeführten Materialbahnen sind vom vorhergehenden Schneidvorgang entsprechend geschnitten. Die zugeführten Materialbahnen werden über die beiden Vorschubbänder 18, 18' hinaus auf die Trommelzuführbänder 2, 2' transportiert, bis das eingelaufene Material die vorgesehene Schnittlänge erreicht hat. Nun werden die beiden Materialbahnen mittels der Schneideinrichtungen 16, 16' durchtrennt. Dies kann in bekannter Weise mittels Rollenmesser erfolgen, wobei beispielsweise eine unter einem spitzen Winkel zur Transportrichtung verlaufende Schnittkante erzeugt wird. Anschließend fahren die Trommelzuführbänder 2, 2' nacheinander in die vorgerückte Abgabeposition und übergeben die abgelängten Reifenbauteile der Reifenaufbautrommel 1. Beispielsweise übergibt das Trommelzuführband 2' zuerst das Materialbahnstück und wird anschließend wieder rückwärts bewegt, sodass das Trommelzuführband 2 mit dem auf ihm befindlichen Materialbahnstück in die Abgabeposition gefahren werden kann. Zwischenzeitlich wird das obere Paar von Vorschubbändern 17, 17' mitsamt den zugeordneten Schneideinrichtungen 15, 15' in die untere Position verfahren, sodass nun Materialbahnen von den Vorschubbändern 17, 17' auf die Zuführbänder 2, 2' transportierbar sind und nach dem Schneidvorgang zur Trommel 1 gefahren werden.

Es sind daher zum Auflegen von vier Gürtellagen lediglich zwei Trommelzuführbänder 2, 2' erforderlich, die jeweils abwechselnd mit den zugeordneten oberen und unteren Vorschubbändern 17, 17', 18, 18' und den Schneideinrichtungen 15, 15', 16, 16' zusammenwirken. Auf diese Weise können vier unterschiedliche Gürtellagen auf der Reifenaufbautrommel 1 in der vorgegebenen Reifenfolge aufgelegt werden.

Die Seitenkanten der aus Kautschukmischungen und eingebetteten Stahlkorden gebildeten Materialbahnen sind durch äußere Krafteinflüsse während der Förderung in ihrem Kantenverlauf nicht geradlinig sondern krummlinig, wobei die Krummlinigkeit beider Seitenkanten unterschiedlich sein kann, sodass auch die in Förderrichtung verlaufende Mittensymmetrielinie zwischen den Seitenkanten eine krummlinige Kurve sein kann. Durch den üblicherweise schrägen Schnitt zur Transportrichtung weisen die Materialbahnteile dreieckförmige Endbereiche auf. Üblicherweise ist vor Allem die vordere Spitze aufgrund verschiedener äußerer Krafteinwirkungen sowie aufgrund der plastischen Verformbarkeit des Materials häufig unregelmäßig gekrümmt. Beim Auflegen eines derartigen Materialbahnteiles würden die Unregelmäßigkeiten im Konturverlauf der Seitenkanten sowie die Verkrümmungen im Bereich der vorderen und der hinteren Spitze bewirken, dass die zu verspleißenden Enden axial zueinander versetzt wären und dass kein paralleler berührender Kontaktverlauf zwischen Vorderkante und Hinterkante vorhanden ist, wodurch die Herstellung einer haltbaren Spleißnaht erschwert oder im Extremfall sogar verhindert werden kann.

Es ist daher vorgesehen, dass die Materialbahnen bei ihrer Übergabe vom Vorschubband 17, 17', 18, 18' auf die Trommelzuführbänder 2, 2' entsprechend ausgerichtet werden. Zu diesem Zweck sind die Vorschubbänder 17, 17', 18, 18' und Trommelzuführbänder 2, 2' mit einer geeigneten Vorrichtung relativ zueinander in seitlicher Richtung, quer zur Transportrichtung, bewegbar. Dabei kommt bevorzugt das aus der DE 196 41 509 A1 bekannte Verfahren zur Anwendung. Zur seitlichen Ausrichtung wird in einem ersten Schritt die in Förderrichtung vordere Spitze der Materialbahn hinsichtlich ihrer Form und ihrer seitlichen Position ausgerichtet, anschließend der Hauptteil der Materialbahn zwischen vorderer und rückwärtiger Spitze hinsichtlich seiner seitlichen Position ausgerichtet und schließlich auch die rückwärtige Spitze des Materialbahnstückes entsprechend ausgerichtet. Sensoren 3, 3', die beispielsweise CCD-Kameras sind, erfassen die seitlichen Bahnkanten der Materialbahn zwischen den Vorschubbändern 17, 17', 18, 18' und den Trommelzuführbändern 2, 2'. Die Nachregulierung und Ausrichtung der Endspitzen und der Seitenkanten des abgelängten Materialbahnstückes erfolgt unter Durchführung einer seitlichen Bewegung des jeweiligen Vorschubbandes 17, 17', 18, 18'. Dabei ermittelt einer der Sensoren die Seitenkantenposition der vorderen Spitze und es wird aufgrund der ermittelten Seitenkantenposition die Spitze so in ihrer Position ausgerichtet und deformiert, dass die die Materialbahn seitlich begrenzende Kante im Bereich der vorderen Spitze einer seitlichen Sollkantenausrichtposition und -kontur entspricht. Die den Seitenkantenverlauf der beiden Seitenkanten ermittelnden Sensoren bewirken anschließend ein Ausrichten des Hauptteils der Materialbahn durch eine seitliche Bewegung der Vorschubbänder 17, 17', 18, 18', indem das Hauptteil an jeder Position in Förderrichtung im Verlauf seiner beiden Seitenkanten seitlich mittensymmetrisch zu seiner Achse in Förderrichtung ausgerichtet wird. Auf analoge Weise erfolgt schließlich die Ausrichtung der rückwärtigen Spitze des Materialbahnstückes.

Die Vorschubbänder 17, 17', 18, 18' erlauben daher die Ausrichtung der Materialbahnen durch ihre seitliche Verschiebung in Abhängigkeit von der gemessenen Orientierung der Seitenkanten der Materialbahn während der Übergabe der Materialbahn an die Trommelzuführbänder 2, 2'.

Die erfindungsgemäße Zubringereinrichtung eignet sich, wie bereits erwähnt, vor Allem zum Erstellen eines Gürtelpakets aus vier Gürtellagen, die sich hinsichtlich ihrer Breite, der Winkelung ihrer Stahlkordfestigkeitsträger und gegebenenfalls sonstiger Parameter unterscheiden. Die erfindungsgemäße Zubringereinrichtung kann auch dafür vorgesehen werden, das Gürtelpaket von PKW-Reifen zu bilden, welches aus zwei Gürtellagen unterschiedlicher Breite besteht. Mit einer erfindungsgemäßen Zubringereinrichtung können zwei unterschiedlich aufgebaute Gürtel für PKW-Reifen erstellt werden ohne einen sonst notwendigen Wechsel der Zubringereinrichtung vornehmen zu müssen.

## Patentansprüche

1. Zubringereinrichtung für eine Reifenaufbautrommel (1), insbesondere für eine Gürteltrommel zum Aufbau eines mehrlagigen Gürtelpaketes eines Fahrzeugluftreifens, wobei auf der Reifenaufbautrommel (1) nacheinander mehrere Lagen von unterschiedlichen oder unterschiedlich behandelten und im Wesentlichen streifenförmigen Materialbahnstücken aufgelegt, angerollt und miteinander verbunden werden,
wobei die Zubringereinrichtung vier Auswickelstationen (4, 5), diesen nachgeordnete Führungsvorrichtungen für die Materialbahnen, sowie den einzelnen Führungsvorrichtungen zugeordnete Zuführungseinrichtungen (13, 13', 14, 14') und Schneideinrichtungen (15, 15', 16, 16') zum Ablängen der Materialbahnen aufweist,
wobei die geschnittenen Materialbahnstücke mittels einer Trommelzuführeinrichtung, welche zwei Trommelzuführbänder (2, 2') aufweist, zur Reifenaufbautrommel (1) transportierbar sind,
wobei die Trommelzuführbänder (2, 2') zwischen einer rückwärtigen Aufnahmeposition und einer vorgerückten Auflageposition an der Reifenaufbautrommel (1) verfahrbar sind,
wobei den Trommelzuführbändern (2, 2') zwei Paare von übereinander angeordneten Schneideinrichtungen (15, 15', 16, 16') zugeordnet sind, welche relativ zu den Trommelzuführbändern (2, 2') derart verfahrbar sind, dass die Trommelzuführbänder (2, 2') in der rückwärtigen Aufnahmeposition abwechselnd mit einem der Paare von Schneideinrichtungen (15, 15', 16, 16') in Wirkverbindung bringbar sind,
**dadurch gekennzeichnet,**
**dass** die paarweise angeordneten Schneidvorrichtungen (15, 15', 16, 16') mit gleichermaßen paarweise angeordneten Vorschubbändern (17, 17', 18, 18') gekoppelt sind, welche mitsamt den Schneidvorrichtungen (15, 15', 16, 16') einzeln vor den Trommelzuführbändern (2, 2') positionierbar sind, wobei die Vorschubbänder (17, 17', 18, 18') und die Trommelzuführbänder (2, 2') relativ zueinander in seitlicher Richtung bewegbar sind.

2. Zubringereinrichtung nach Anspruch 1, **dadurch gekennzeichnet, dass** Sensoreinrichtungen (3, 3') zum Erfassen der Position der Endabschnitte und der Seitenkanten der Materialbahnstücke vorgesehen sind, welche Sensoreinrichtungen (3, 3') jeweils mit jenen Paaren von Schneidvorrichtungen (15, 15', 16, 16') und Vorschubbändern (17, 17', 18, 18') zusammenwirken, welche zu den Trommelzuführbändern (2, 2') ausgerichtet sind.

3. Zubringereinrichtung nach Anspruch 1 oder 2, **dadurch gekennzeichnet, dass** die Schneideinrichtungen (15, 15', 16, 16') mitsamt den ihnen zugeordneten Vorschubbändern (17, 17', 18, 18') an einer Hubeinrichtung (6) in vertikaler Richtung verfahrbar sind.

## Claims

1. Supply device for a tire building drum (1), in particular for a breaker belt drum for building a multi-ply breaker belt assembly of a pneumatic vehicle tire, a number of plies of different or differently treated, substantially strip-like pieces of material web being successively placed on the tire building drum (1), rolled and bonded to one another,
wherein the supply device has four unwinding stations (4, 5), guiding devices arranged downstream of the latter for the material webs, as well as feeding devices (13, 13', 14, 14') and cutting devices (15, 15', 16, 16') assigned to the individual guiding devices for cutting the material webs to length,
wherein the cut pieces of material web can be transported to the tire building drum (1) by means of a drum feeding device, which has two drum feeding belts (2, 2'), the drum feeding belts (2, 2') being displaceable between a backward receiving position and an advanced-forward resting position on the tire building drum (1),
wherein the drum feeding belts (2, 2') are assigned two pairs of cutting devices (15, 15', 16, 16'), which are arranged one above the other and can be displaced in relation to the drum feeding belts (2, 2') in such a way that the drum feeding belts (2, 2') in the backward receiving position can be alternately brought into operative connection with one of the pairs of cutting devices (15, 15', 16, 16'),
**characterized**
**in that** the cutting devices (15, 15', 16, 16') that are arranged in pairs are coupled with advancing belts (17, 17', 18, 18') which are equally arranged in pairs and can be positioned together with the cutting devices (15, 15', 16, 16') individually in front of the drum feeding belts (2, 2'), the advancing belts (17, 17', 18, 18') and the drum feeding belts (2, 2') being movable in relation to one another in a lateral direction.

2. Supply device according to Claim 1, **characterized in that** sensor devices (3, 3') for sensing the position of the end portions and the side edges of the pieces of material web are provided, which sensor devices (3, 3') respectively interact with those pairs of cutting devices (15, 15', 16, 16') and advancing belts (17, 17', 18, 18') that are aligned in relation to the drum feeding belts (2, 2_{'}).

3. Supply device according to Claim 1 or 2, **characterized in that** the cutting devices (15, 15', 16, 16') can be moved together with the advancing belts (17, 17', 18, 18') assigned to them in a vertical direction on a lifting device (6).

## Revendications

1. Dispositif d'amenée d'un tambour (1) de montage de bandage de roue, en particulier d'un tambour de ceinture destiné à monter un paquet multicouche de ceinture d'un bandage pneumatique pour roue de véhicule,
plusieurs couches de morceaux de nappe de matières différentes ou traitées différemment et essentiellement en forme de ruban étant placées, enroulées et reliées les unes aux autres sur le tambour (1) de montage de bandage de roue,
le dispositif d'amenée présentant quatre postes de déroulement (4, 5) suivis par des dispositifs d'approvisionnement en nappes de matière, ainsi que des dispositifs de guidage (13, 13', 14, 14') et des dispositifs de découpe (15, 15', 16, 16') qui découpent les nappes de matière et associés aux différents dispositifs de guidage,
les morceaux découpés de nappes de matière pouvant être transportés vers le tambour (1) de montage de bandage de roue au moyen d'un dispositif de guidage de tambour qui présente deux bandes (2, 2') de guidage de tambour,
les bandes (2, 2') de guidage de tambour pouvant être déplacées sur le tambour (1) de montage de bandage de roue entre une position reculée de réception et une position avancée de pose,
deux paires de dispositifs de coupe (15, 15', 16, 16') disposées l'une au-dessus de l'autre étant associées aux bandes (2, 2') de guidage de tambour et pouvant être déplacées par rapport aux bandes (2, 2') de guidage de tambour de telle sorte que les bandes (2, 2') de guidage de tambour puissent être amenées à coopérer avec l'une des paires de dispositifs de découpe (15, 15', 16, 16') en alternance dans la position reculée de réception,
**caractérisé en ce que**
les dispositifs de coupe (15, 15', 16, 16') disposés par paires étant accouplés à des bandes d'avancement (17, 17', 18, 18') disposées de même par paires et aptes à être positionnées séparément en avant des bandes (2, 2') de guidage de tambour en même temps que les dispositifs de coupe (15, 15', 16, 16'), les bandes d'avancement (17, 17', 18, 18') et les bandes (2, 2') de guidage de tambour pouvant être déplacées l'une par rapport à l'autre dans la direction latérale.

2. Dispositif d'amenée selon la revendication 1, **caractérisé en ce que** des dispositifs de détection (3, 3') qui détectent la position des tronçons terminaux et des bords latéraux des morceaux de nappes de matière sont prévus, les dispositifs de détection (3, 3') coopérant chacun avec une paire respective de dispositifs de découpe (15, 15', 16, 16') et de bandes d'avancement (17, 17', 18, 18') qui sont alignées sur les bandes (2, 2') de guidage de tambour.

3. Dispositif d'amenée selon les revendications 1 ou 2, **caractérisé en ce que** les dispositifs de découpe (15, 15', 16, 16') peuvent être déplacés dans la direction verticale sur un dispositif de relèvement (6) en même temps que les bandes d'avancement (17, 17', 18, 18') qui leurs sont associées.
